# EUROPÄISCHE PATENTSCHRIFT

(11) **EP 0 763 545 B1**
(45) Veröffentlichungstag und Bekanntmachung des Hinweises auf die Patenterteilung: **23.04.1997**
(21) Anmeldenummer: 95114344.5
(22) Anmeldetag: 13.09.1995
(51) Int. Cl.: C08F 4/602

(54) **Verfahren zur Herstellung von Metallocen-Katalysatorsystemen auf inerten Trägermaterialien**
Process for the production of metallocene catalysts on inert supports
Procédé de préparation d'un système catalytique à base de métallocène sur support inerte

(43) Veröffentlichungstag der Anmeldung: 19.03.1997
(73) Patentinhaber: Witco GmbH, 59192 Bergkamen (DE)
(72) Erfinder: Kutschera, Dirk, D-44139 Dortmund (DE); Rieger, Rainer, Dr., D-53121 Bonn (DE)

(56) Entgegenhaltungen:
- EP-A- 0 668 295
- EP-A- 0 672 671
- WO-A-95/15216

## Beschreibung

Metallocen-Katalysatorsysteme gewinnen zunehmend an Bedeutung als neue Generation von Katalysatorsystemen zur Herstellung von Polyolefinen ("Single Site Catalysts"). Diese neuen Katalysatoren bestehen im wesentlichen, wie bereits aus der klassischen Ziegler-Natta-Katalyse bekannt, aus einer Übergangsmetallverbindung als Katalysator sowie einer Cokatalysator-Komponente, beispielsweise einem Alkylaluminoxan, insbesondere Methylaluminoxan. Als Übergangsmetallverbindung werden bevorzugt Cyclopentadienyl-, Indenyl- oder Fluorenylderivate der Gruppe IVa des Periodensystems der Elemente eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüberhinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig in fast allen Fällen ist jedoch die Tatsache, daß zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000 : 1). Durch den hohen Preis der Alkylaluminoxane einerseits und durch in manchen Fällen erforderliche zusätzliche Polymer-Aufarbeitungsschritte ("deashing steps") andererseits wäre eine Polymerproduktion in technischem Maßstab auf Basis solcher Katalysatorsysteme vielfach unwirtschaftlich. Hinzu kommt, daß das für die Formulierung von Alkylaluminoxanen, insbesondere Methylaluminoxan, vielfach verwendete Lösungsmittel Toluol aus Gründen der Lagerstabilität hochkonzentrierter Formulierungen (starke Tendenz zur Gelbildung der Aluminoxanlösungen) sowie im Hinblick auf den Anwendungsbereich der letztendlich resultierenden Polyolefine aus toxikologischen Gründen zunehmend unerwünscht ist.

Eine signifikante Reduktion der benötigten Alkylaluminoxan-Menge in Bezug auf die Übergangsmetall-Komponente kann erreicht werden, indem Alkylaluminoxan auf inerte Trägermaterialien, bevorzugt SiO₂, aufgebracht wird (J. C. W. Chien, D. He, J. Polym. Science Part A, Polym. Chem., Vol.29, 1603-1607 (1991). Solche geträgerten Materialien besitzen darüberhinaus den Vorteil der leichten Abtrennbarkeit bei Polymerisationen in kondensierter Phase (Herstellung hochreiner Polymere) bzw. der Einsetzbarkeit als frei fließende Pulver in modernen Gasphasenprozessen, wobei die Kornmorphologie des Polymeren direkt durch die Partikelform des Trägers vorgegeben werden kann. Darüberhinaus sind trägerfixierte Alkylaluminoxane als trockene Pulver physikalisch stabiler als Lösungen mit vergleichbarem Al-Gehalt. Dies gilt insbesonders für Methylaluminoxan, das, wie bereits erwähnt, in toluolischer Lösung nach einer gewissen Lagerzeit zur Gelbildung neigt.

Auch, oder gerade die aus den Aluminoxan mit den Metallocenen gebildeten Metallocenkatalysatorsysteme sind in geträgerter Form wesentlicher stabiler als in Lösung.

In der Literatur werden bereits einige Möglichkeiten beschrieben, Alkylaluminoxane auf Trägern zu fixieren:

Die EP-A-0 369 675 (Exxon Chemical) beschreibt ein Verfahren, in dem die Immobilisierung von Alkylaluminoxanen durch Umsetzung einer ca. 10 %igen Lösung von Trialkylaluminium in Heptan mit hydratisiertem Silica (8,7 Gew.-% H₂O) erreicht wird.

In EP-A-0 442 725 (Mitsui Petrochemical) wird die Immobilisierung durch Reaktion einer Toluol/Wasser-Emulsion mit einer ca. 7 %igen Lösung von Trialkylaluminium in Toluol in Gegenwart von Silica bei Temperaturen von -50 °C bis +80 °C bewirkt.

Eine weitere Alternative eröffnet US-PS 5 026 797 (Misubishi Petrochemical) durch Umsetzung bereits vorgefertigter Alkylaluminoxan-Lösungen mit Silica (vorgetrocknet bei 600 °C) bei 60 °C und nachfolgende Auswaschung des nicht immobilisierten Alkylaluminoxan-Anteils durch Toluol.

US-PS 4 921 825 (Mitsui Petrochemical) letztendlich beschreibt ein Verfahren zur Immobilisierung von Alkylaluminoxan durch Fällung aus toluolischen Lösungen mittels n-Decan in Gegenwart von Silica.

Diese Verfahren sind teilweise technisch aufwendig, da sie unter anderem zu Beginn niedrige Reaktionstemperaturen bzw. mehrstufige Aufarbeitungsprozesse und dadurch Ausbeuteverluste im Hinblick auf die eingesetzte Menge an Aluminium in Form von Aluminiumtrialkylen beinhalten. Darüberhinaus wird die Raum-/Zeit-Ausbeute durch den obligaten Einsatz relativ hoher Mengen an Lösungsmittel zum Teil erheblich beeinträchtigt.

Schließlich muß noch nachfolgend die Trägerfixierung des Metallocens erfolgen, um zu einem aktiven Polymerisationskatalysator zu gelangen. Ein weiterer Reaktionsschritt in einem Lösemittel ist damit notwendig. Dadurch wird die Wirtschaftlichkeit dieser Systeme ein weiteres mal in Frage gestellt.

Zur Trägerfixierung der Metallocene existieren ebenfalls mehrere Möglichkeiten.

So kann einerseits das Metallocen aus Lösung mit dem suspendierten geträgerten Aluminoxan in Kontakt gebracht werden oder das Metallocen kann zuerst mit dem Aluminoxan zur Reaktion gebracht werden und das Reaktionsprodukt nachfolgend auf dem inerten Träger gebracht werden. Bei beiden Methoden sind die Aufarbeitungsschritte nicht trivial, da von den Reaktionstemperaturen und den Trocknungsbedingungen der Trägerungserfolg und die Aktivität des fertigen Katalysators entscheidend abhängen (vergl. EP-A-0 560 128, US-A 5 308 815).

Eine Aufgabe der vorliegenden Erfindung war es daher, diese Nachteile des Standes der Technik zu überwinden und ein wirtschaftliches Verfahren bereitzustellen, mittels welchem aktive Katalysatoren für die Olefinpolymerisation, bestehend aus Alkylaluminoxanen und Metallocenen, in einem Verfahrensschritt weitestgehend ohne Mitverwendung von organischen Lösungsmitteln in hoher Ausbeute und Homogenität in reproduzierbarer Weise auf inerten Trägermaterialien fixiert werden können, wobei die Kornmorphologie des Trägers erhalten bleibt und die Produkte letztlich als freifließende Pulver vorliegen.

Nach der zwischen veröffentlichten Anmeldung EP-A-0 672 671 wurde gefunden, daß einige der vorab aufgeführten Nachteile dadurch beseitigt werden können, daß man die Synthese von Alkylaluminoxanen, insbesondere Methylaluminoxanen (MAO) und deren Fixierung auf inerten Trägern, unmittelbar über die Gasphase ohne jeglichen Einsatz von Lösungsmitteln und ohne zusätzliche Verfahrensschritte ausführt.

Es wurde nun gefunden, daß hier auch das Metallocen durch Variation der Wirbelschichtgeometrie gleichzeitig und zusammen mit bzw. nach dem Aluminoxan geträgert werden kann. Bei einer batchweisen Verfahrensführung ist auch die Prepolymerisation in einem anschließenden Schritt möglich, so daß das Endprodukt sofort für die Polymerisation zur Verfügung steht.

Die erhaltenen Endprodukte sind freifließende Pulver, welche direkt für die Olefinpolymerisation als hochaktive Katalysatoren eingesetzt werden können. Die Kornmorphologie wird innerhalb des Verfahrens nicht negativ, sondern eher positiv verändert. Geringe Feinanteile des Trägermaterials werden innerhalb der Wirbelschicht einerseits durch die Trägerung aufgebaut, andererseits können kleinste Anteile auch ausgetragen werden. Durch die Verwendung einer zirkulierenden Wirbelschicht ist durch gezielte Variation der Gasströme auch ein partikelgrößenorientierter Austrag des Produktes möglich.

Gegenstand der vorliegenden Erfindung ist somit ein Verfahren zur Herstellung von auf inerten Trägermaterialien fixierten Metallocenkatalysatorsystemen aus Alkylaluminiumverbindungen, Wasser und Metallocenen, welches dadurch gekennzeichnet ist, daß die Reaktanden mit dem Gasstrom in Wirbelschichtreaktoren eindosiert und nach der Reaktion unmittelbar aus der Gasphase auf den Träger fixiert bzw. aufgebracht werden, wobei in den Wirbelschicht reaktoren ein Druck von 50 bis 2000 KPa und eine Temperatur von 2 bis 90°C herscht.

Ein weiterer Gegenstand der Erfindung ist ein Verfahren zur Herstellung von auf inerten Trägermaterialien fixierten Metallocenkatalysatorsystemen aus Alkylaluminiumverbindungen, Wasser und Metallocenen, welches dadurch gekennzeichnet ist, daß der nach obigen Verfahren hergestellte geträgerte Katalysator vorzugsweise ohne vorherige Isolierung durch Zudosierung eines Olefins in die Wirbelschicht zu einem Prepolymerisat umgesetzt wird.

Ein weiterer Gegenstand der Erfindung sind auf Trägermaterialien fixierte Metallocenkatalysatorsysteme, hergestellt gemäß den erfindungsgemäßen Verfahren.

Weitere Gegenstände der Erfindung werden durch die Ansprüche gekennzeichnet.

Die Herstellung erfolgt nach allgemein bekannten Wirbelschichtverfahren. Unter Wirbelschicht versteht man eine feinkörnige Feststoffschicht, die von einem hindurchströmenden Fluid soweit aufgelockert ist, daß die Partikel über eine bestimmte Strecke einen Ortswechsel vornehmen können (Walter Wagner Kamprath, Reihe Technik, Wärmeübertrag, 2. Auflage, Würzburg, Verlag Vogel, 1988, Seite 143).

Dabei unterscheidet man zwischen einer stehenden und zirkulierenden Wirbelschicht (Dieter, Onken, Leschonski, Grundzüge der mechanischen Verfahrenstechnik, 1. Auflage, München; Wien: Verlag Hanser 1986, Seite 40 - 47, 298 - 300).

Gemäß dem erfindungsgemäßen Verfahren werden die Wirbelschichten mittels kontinuierlicher Inertgasströme aufrecht erhalten. Der Druck innerhalb der Reaktoren ist in weiten Bereichen wählbar und richtet sich nach den Erfordernissen. Erfindungsgemäß bevorzugt sind Drücke zwischen 10⁴ - 10⁶ Pa.

In Wirbelschichtreaktoren werden Feststoffpartikel durch einen aufsteigenden Gasstrom aufgewirbelt. Hierbei kann der Feststoff als Katalysator oder als Reaktionspartner dienen (Vauck, Müller, Grundoperationen chemischer Verfahrenstechnik, 8. Aufl. New York; Weinheim: VCH Verlagsgesellschaft mbH, Seite 230).

Die Feststoffpartikel und die Gasphase können während des Betriebs kontinuierlich ausgetauscht werden.

Zur Aufrechterhaltung der Wirbelschicht können darüber hinaus die als Reaktionsprodukte anfallenden Alkane dienen, sofern diese unter den gegebenen Reaktionsbedingungen gasförmig vorliegen. Die Dosierung der Reaktanden Trialkylaluminium, insbesondere Trimethylaluminium (TMA) und Wasser, sowie der Metallocenlösung in den Wirbelschichtreaktor kann über die verwendeten Gasströme erfolgen. Durch Regulierung der jeweiligen Gasströme läßt sich sowohl das gewünschte Methyl/Aluminium-Verhältnis des Alkylaluminoxans als auch der Beladungsgrad des Trägers systematisch steuern. Bei dafür geeigneten Trägermaterialien wie z. B. SiO₂ kann der Reaktionspartner Wasser darüberhinaus in an die Oberfläche des Trägers gebundener Form eingebracht werden.

Auch die direkte Einspeisung von Trialkylaluminium, insbesondere Trimethylaluminium (TMA) und Wasser in die Gasphase (Gasstrom dient hier einzig zur Aufrechterhaltung der Wirbelschicht) sowie ein kontinuierliches Betreiben der Anlage ist möglich. In allen Fällen bleibt die ursprüngliche Kornmorphologie des Trägers erhalten.

Das Lösemittel des Metallocens wird während der Gasphasenträgerung ausgetauscht und läßt sich in einer nachgeschalteten Abscheidereinrichtung abtrennen. Das Endprodukt ist daher frei von Lösemittelanteilen.

Zur Herstellung der Aluminoxane kann das molare Verhältnis von Wasser zu Alkylaluminiumverbindungen in Bereichen von 0,5 : 1 bis 1,5 : 1, vorzugsweise 0,7 : 1 bis 1,3 : 1 liegen.

Die Darstellung der Metallocenkatalysatoren durch Zudosieren der Metallocenlösung erfolgt nach den Erfordernissen, die an das Katalysatorsystem gestellt werden. Es können zwischen 0,1 und 30 Gew.% Metallocen, die in Form ihrer Lösung in die Wirbelschicht eingebracht werden, geträgert werden, vorzugsweise zwischen 0,5 bis 15 %.

Das Molverhältnis H₂O/Aluminium-trialkyl, insbesondere auch bei TMA, kann auf den gewünschten Wert eingestellt werden. Dies ist von besonderer Bedeutung, da die Polymerisationsaktivität von Aluminoxanen als Cokatalysator in der Olefinpolymerisation offenbar vom Anteil freien Trialuminiumalkyls abhängig sein kann. Da es sich um einen geträgerten Feststoff bei dem Methylaluminoxan handelt, ist die Bestimmung eines Oligomerisationsgrades nicht trivial; bei der Trägerung handelt es sich um eine Feststoffträgerung, bei der das Methylaluminoxan als pseudokristalliner bzw. amorpher Feststoff niedergeschlagen und fixiert wird.

Eine Bestimmung eines Oligomerisationsgrades bzw. der Molmasse des Aluminoxans im geträgerten System ist daher nach klassischen Methoden nicht mehr möglich. (Literatur: W. Kaminsky, Nachr. Chem. Tech. Lab. 29, 373-7 (1981); W. Kaminsky et.al., Makromol. Chem., Macromol. Symp. 3, 377-87 (1986)).

Durch Immobilisierungsuntersuchungen kann sichergestellt werden, daß keine vom Trägermaterial ablösbaren Anteile mehr vorliegen, die im Falle der Polymerisation in Lösungen zu Problemen durch Reaktorfouling führen können (Mischpolymerisation homogen/heterogen durch die löslichen Anteile).

Als aluminiumorganische Verbindungen sind prinzipiell alle auf diesem Gebiet üblichen Verbindungen verwendbar, welche mit Wasser zu Aluminoxanen hydrolysiert werden können. Erfindungsgemäß bevorzugt sind Trialkylaluminiumverbindungen (R)₃Al mit kurzkettigen Alkylresten mit 1 - 10 C-Atomen, insbesondere 1 - 5 C-Atomen wie Methyl-, Ethyl-, Propyl-, isoPropyl-, Butyl-, isoButyl-, tert. Butyl-, Pentyl-Rest. Erfindungsgemäß bevorzugt wird Trimethylaluminium.

Außer diesen Verbindungen sind erfindungsgemäß auch andere Co-Katalysatoren mitverwendbar wie insbesondere bororganische Verbindungen wie z. B. Tris-[pentafluor-phenyl]bor, Triphenylcarbeniumtetrakis[pentafluor-phenyl]borat, N,N-Dimethyl-aniliniumtetrakis[pentafluor-phenyl]borat.

Als Metallocenkomponente stehen alle Verbindungen zur Verfügung, die in der metallocenkatalysierten Polymersiation Anwendung finden, wie beispielsweise verbrückte, unverbrückte Metallocen-Sandwichkomplexe sowie entsprechende Halbsandwich-Komplexe.

Diese erfindungsgemäß mitverwendbaren Verbindungen, ihre Herstellung und Verwendung sind in den EP-A-0 480 390, EP-A-0 413 326, EP-A-0 530 908, EP-A 0 344 887, EP-A 0 420 436, EP-A 0 416 815, EP-A 0 520 732 eingehend beschrieben.

Als Prepolymerisat-Olefin können alle Olefine Anwendung finden, die zur Darstellung der aktiven Katalysatorverbindung genutzt werden können bzw. die in der Polymerisation Verwendung finden. Dazu gehören insbesondere alpha-Olefine, beispielsweise Ethen, 1-Propen, 1-Hexen.

Als erfindungsgemäß verwendbare Trägermaterialien werden die porösen Oxide eines oder mehrerer der Elemente der Haupt-Gruppen II, III oder IV sowie der II. und IV. Nebengruppe des Periodensystems wie ZrO₂, TiO₂, B₂O₃, CaO, ZnO, BaO, vorzugsweise Al₂O₃ und MgO und insbesondere SiO₂, eingesetzt.

Diese Trägermaterialien können Korngrößen im Bereich von 1 - 300 µm, vorzugsweise 10 - 200 µm, aufweisen; Oberflächen von 10 - 1000 m²/g, insbesondere 100 - 500 m²/g; N₂-Porenvolumina von 0,5 - 3 cm³, vorzugsweise 1 - 2 cm³.

Diese Träger sind handelsübliche Materialien, welche die angegebenen Werte in statistischer Verteilung enthalten.

Der Wassergehalt der Trägermaterialien kann je nach Verfahrensweise zwischen ca. 0 bis 15 Gew.-% variieren. Die gewünschten Wassergehalte können nach den allgemein bekannten Hydratisierungsverfahren oder Calcinierungsverfahren von handelsüblichen Trägermaterialien eingestellt werden.

Das Verhältnis von Träger zu Aluminoxan ist innerhalb relativ weiter Grenzen variierbar. Falls gewünscht, kann mit dem erfindungsgemäßen Verfahren trägerfreies Aluminoxan (Aluminiumgehalt theoretisch maximal 46,5 Gew.-%) hergestellt werden. Erfindungsgemäß wird es vorzugsweise so gewählt, daß auf dem resultierenden freifließenden Pulver aus Trägermaterial und Aluminoxan 3 - 40 Gew.-% Aluminium, vorzugsweise 5 - 30 Gew.-% Aluminium, in Form von Aluminoxanen vorliegen.

Die Metallocenkomponente wird in der Art eingebracht, daß ein Aluminium-Metallocenverhältnis (bezogen auf das ME = Metallocen-Zentralatom) so eingestellt wird, daß ein hochaktiver Katalysator ausgebildet wird. Typischerweise beträgt dieses Verhältnis Al : ME = 5000 : 1 bis 10 : 1, im besonderen 500 : 1 bis 50 : 1.

Dazu wird nach Bildung des Aluminoxans in der Wirbelschicht eine Lösung des Metallocens in einem inerten Lösemittel über eine Düse in die Wirbelschicht dosiert, in der Art, daß sich das gebildete Metallocenium-Katalysatorsystem auf dem Trägermaterial bilden kann oder als komplettes System erst auf dem Träger abgeschieden wird.

Die Prepolymerisation erfolgt zeitabhängig durch Zudosieren des Olefins in Abhängigkeit von den Notwendigkeiten der nachfolgenden Polymerisation.

Dazu kann nach Trägerung des Aluminoxans bzw. des Metalloceniumkatalysatorsystems über eine Düse das monomere Olefin in den Gasstrom der Wirbelschicht eingebracht werden und so das Prepolymerisat bilden. Dabei finden die gleichen Volumenströme Anwendung, die auch für die Trägerung der Aluminoxankomponente genutzt werden.

Das erfindungsgemäße Verfahren ermöglicht die Herstellung von geträgerten Metallocenkatalysatorsystemen mit nahezu quantitativen Ausbeuten an immobilisiertem Aluminium und Metallocen, bezogen auf eingesetzte Komponenten. Aufgrund gezielt einstellbarer und reproduzierbarer Verfahrensbedingungen weisen diese mit dem erfindungsgemäßen Verfahren hergestellten geträgerten Metallocenkatalysatorsysteme hohe Aktivitäten auf und sind somit hervorragend geeignet für die Olefinpolymerisation.

Weiterhin ist durch die einfache Kombination mit einer Prepolymerisation in der gleichen Prozeßführung und Anlage die Darstellung der direkt für einige Polymerisationsprozesse einsetzbaren Prepolymere möglich.

Die nach dem erfindungsgemäßen Verfahren hergestellten geträgerten Katalysatorsysteme und Prepolymere können problemlos in den bekannten Olefin-Polymerisationsprozessen, wie beispielsweise auch WO 94/14856 oder US-PS 5 086 025 bzw. US-PS 5 234 878, eingesetzt werden.

Das erfindungsgemäße Verfahren wird im folgenden anhand von Beispielen illustriert. Die in den Beispielen angegebenen Werte zu den Prozeßvariablen - Temperatur, Druck und Volumenströme - sind über die gesamte Versuchsdurchführung gemittelte Werte. Die Versuche wurden so durchgeführt, daß diese Mittelwerte innerhalb des bevorzugten Bereiches lagen.

Die Verfahrensparameter können innerhalb der angegebenen Minima und Maxima zur Variierung bzw. Optimierung von Produkten herangezogen werden.

### Allgemeine Angaben zu den Reaktionsparametern bei der Durchführung des erfindungsgemäßen Verfahrens

Die Beispiele beziehen sich auf eine Anlage mit einer Wirbelschichtkapazität von ca. 1000 mL und können nach Notwendigkeit maßstabsbezogen hochgerechnet werden.

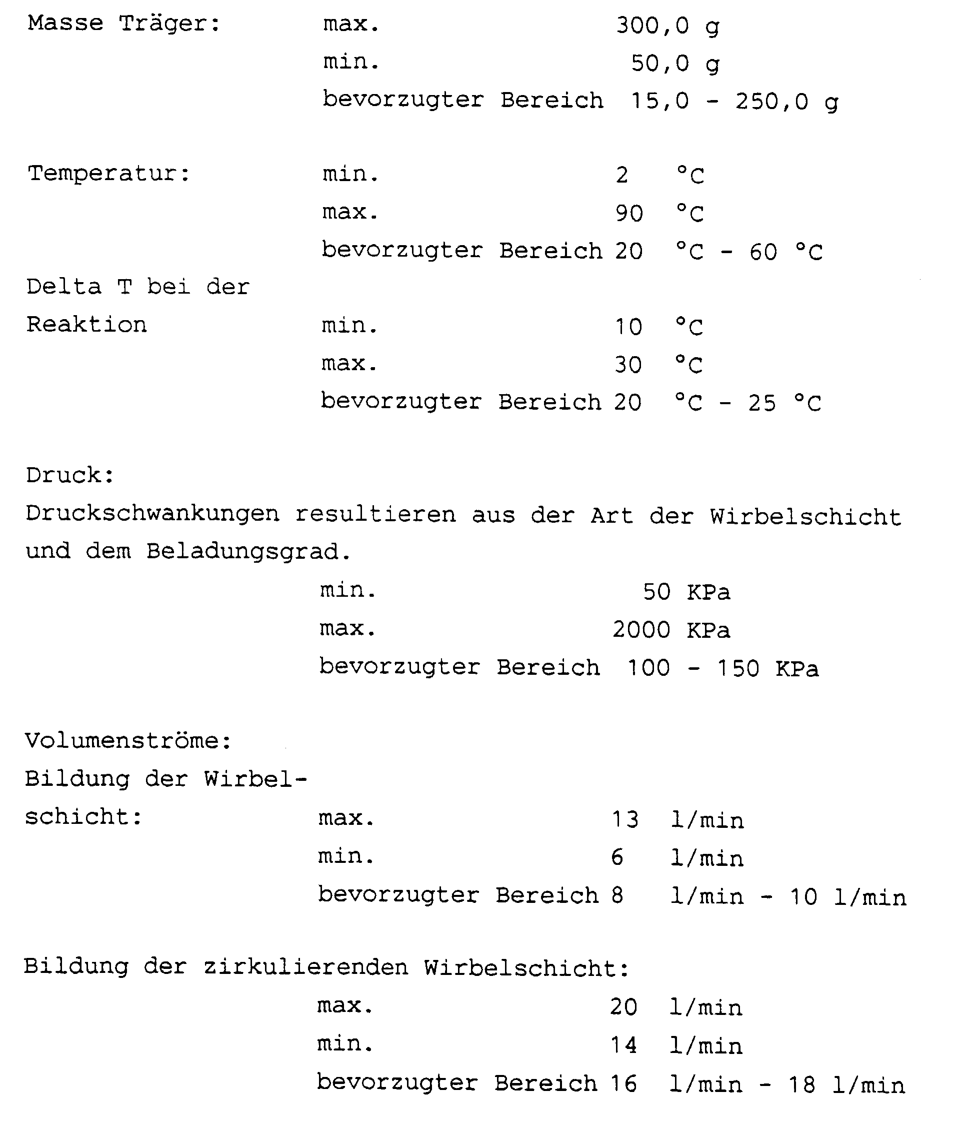

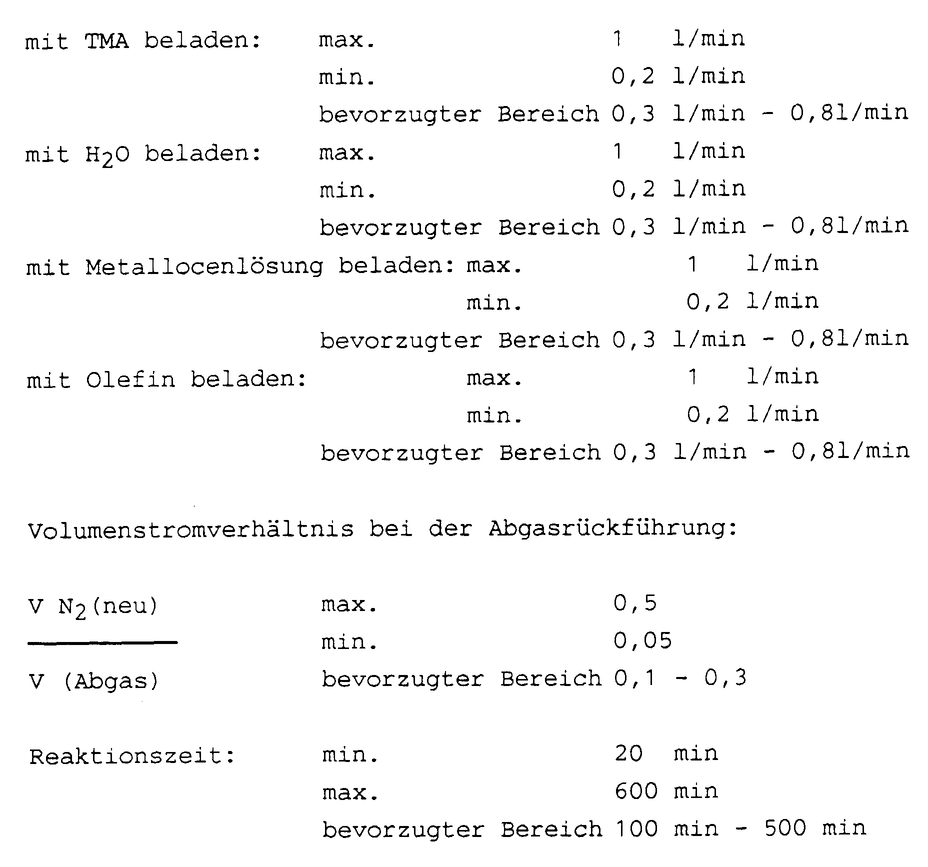

### Beispiele

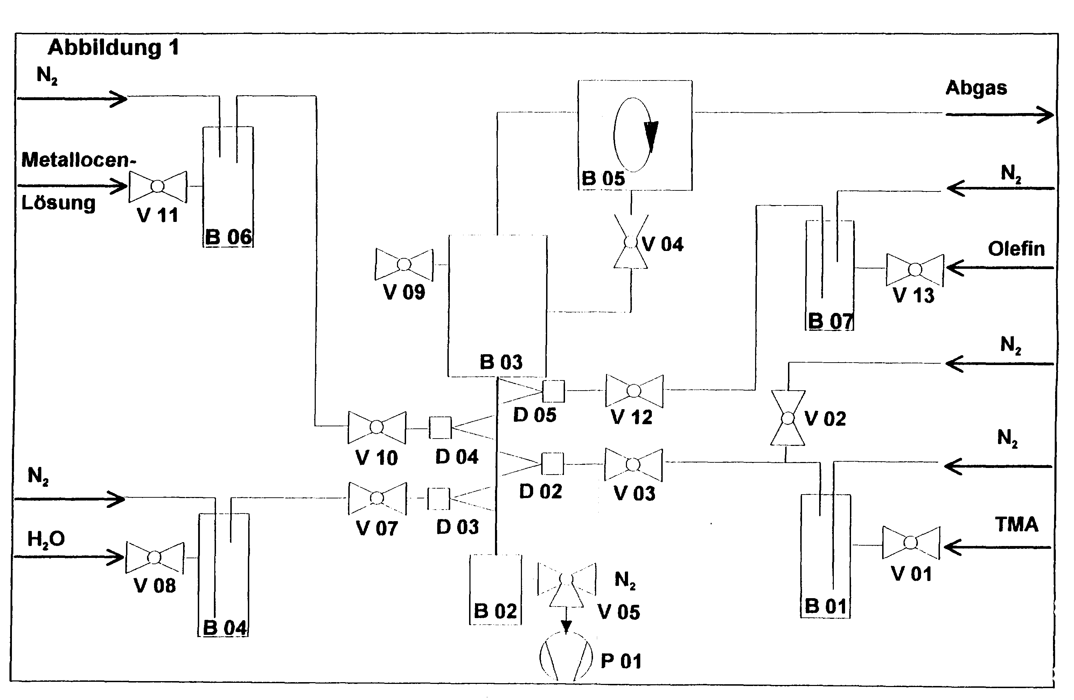

### Beispiel 1: (Simultandosierung über separate Gasströme Abb. 1)

Alle Ventile waren in der Grundstellung geschlossen. Der Feststoff wurde über Ventil V 09 in B 03 vorgelegt. Zur Bildung einer Wirbelschicht in B 05 wurde Ventil V 05 geöffnet und N₂ zugeführt. Über Ventil V 04 wurde der abgeschiedene Feststoff wieder nach B 03 geführt.

In den Dosierbehälter B 01 wurde über Ventil V 01 Trimethylaluminium (TMA) und in den Dosierbehälter B 04 über Ventil V 08 H₂O zugegeben.

Zuerst wurde über ventil V 03 ein mit TMA beladener Inertgasstrom in den Reaktionsbehälter B 03 geleitet. Als sich die Wirbelschicht in B 05 stabilisiert hatte, wurde über Ventil V 07 ein zweiter mit H₂O beladener Inertgasstrom nach B 03 geführt.

Zur Dosierung von Metallocen-Lösung wurde in B 06 durch V 11 die Metallocenlösung vorgelegt und durch Öffnen von V 10 die Metallocenlösung durch die Düse D 04 in den Wirbelschichtbereich in B 05 eingebracht. Die Dosierung konnte gleichzeitig mit der TMA/Wasserdosierung erfolgen, konnte aber auch nach erfolgter Aluminoxanträgerung durchgeführt werden.

Nach der Reaktionszeit wurde die TMA bzw. H₂O-Zugabe durch Schließen der Ventile V 07 und V 03 gestoppt. Über Ventil V 05 wurde die Wirbelschicht in B 05 unterbrochen und das Produkt fiel in B 02.

Zur Dosierung von Olefin zur Prepolymerisation wurde nach Trägerung von Aluminoxan und Metallocen das Olefin über V 13 in B 07 eingebracht und über V 12 in die Wirbelschicht in B 05 dosiert.

### Reaktionsparameter

### Träger: Oberfläche N₂-BET = 316 m²/g; Partikelgrößenverteilung = 10 - 100 µm; N₂-Porenvolumen = 1,55 ml/g

| | |
|---|---|
| Masse Träger: | 75,0 g |
| Reaktorvolumen: | 2 l |
| Volumenstrom N₂ (Bildung der Wirbelschicht): | 8,31 l/min |
| Volumenstrom N₂ (mit TMA beladen): | 0,51 l/min |
| Volumenstrom N₂ (mit H₂O beladen): | 0,51 l/min |
| Reaktionszeit: | 90 min |
| Reaktionstemperatur: | min 28 °C |
| | max 34 °C |
| Druck: | ca. 1 bar |

Das erhaltene Produkt besaß einen Al-Gehalt von 21,1 % (m/m) und ein Methyl/Al-Verhältnis von 0,99. Ausbeute: 111 g = 97,7 %.

### Beispiel 2:

Die Versuchsdurchführung erfolgte analog Beispiel 1 mit der Abwandlung, daß 100 g Träger eingesetzt wurden und die Reaktionszeit 225 min betrug.

Der Al-Gehalt des Produktes betrug 14,5 % (m/m) und das Methyl/Al-Verhältnis 1,06. Ausbeute: 127 g = 94 %.

### Beispiel 3: (Reaktand H₂O auf Träger in adsorbierter Form)

Die Versuchsdurchführung erfolgte analog Beispiel 1 mit der Abwandlung, daß 19 g hydratisierte Träger mit 2,6 Gew.-% Wasser zugesetzt wurden. Da dadurch eine zusätzliche Eindosierung von H₂O nicht erfolgen sollte, blieb Ventil V 07 über die gesamte Versuchszeit geschlossen.

Nach einer Reaktionszeit von 30 min hatte das Produkt einen Al-Gehalt von 2,6 % (m/m) und ein Methyl/Al-Verhältnis von 0,98.

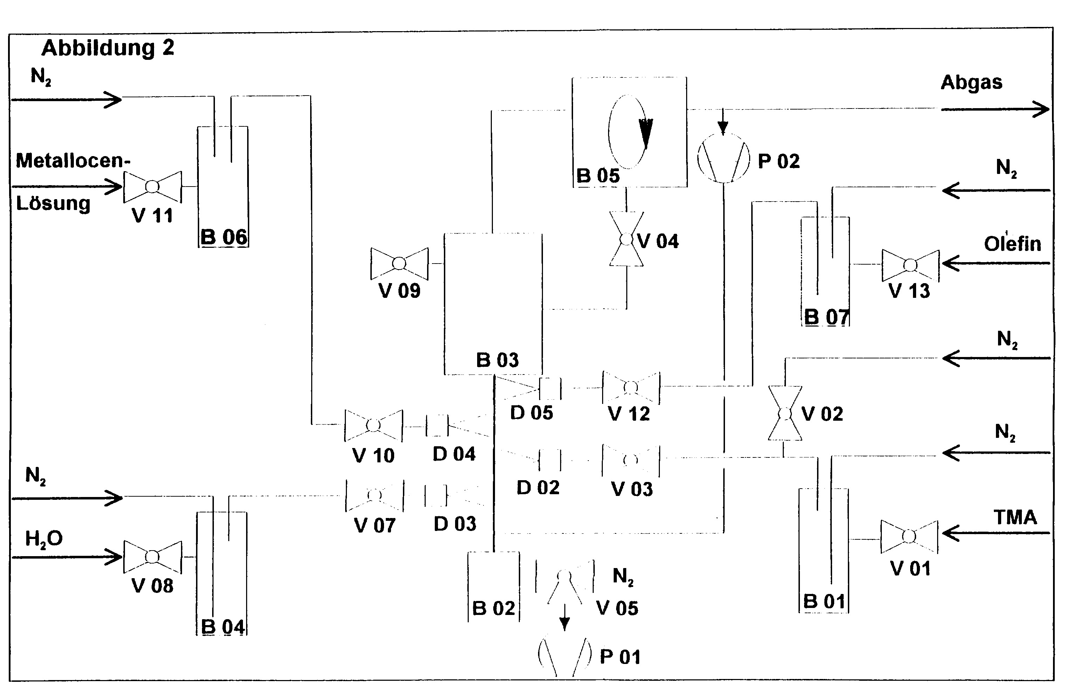

### Beispiel 4: (Rückführung der Abgase Abb. 2)

Alle Ventile waren in der Grundstellung geschlossen. Der Feststoff wurde über ventil V 09 in B 03 vorgelegt. Zur Bildung einer Wirbelschicht in B 05 wurde Ventil V 05 geöffnet und N₂ zugeführt. Über Ventil V 04 wurde der abgeschiedene Feststoff wieder nach B 03 geführt.

In den Dosierbehälter B 01 wurde über Ventil V 01 TMA und in den Dosierbehälter B 04 über Ventil V 08 H₂O zugegeben.

Zuerst wurde über Ventil V 03 ein mit TMA beladener Inertgasstrom in den Reaktionsbehälter B 03 geleitet. Als sich die Wirbelschicht in B 05 stabilisiert hatte, wurde über Ventil V 07 ein zweiter mit H₂O beladener Inertgasstrom nach B 03 geführt.

Der Kompressor P 02 zur Rückführung der Abgase wurde eingeschaltet und gleichzeitig der Volumenstrom N₂ zur Bildung der Wirbelschicht reduziert. Nach der Reaktionszeit wurde der Kompressor P 02 ausgeschaltet und die TMA- bzw. H₂O-Zugabe durch Schließen der Ventile V 07 und V 03 gestoppt. Über Ventil V 05 wurde die Wirbelschicht unterbrochen und das Produkt fiel in B 02.

Die Reaktionsparameter waren analog zu Beispiel 1 mit folgenden Ausnahmen:

| | |
|---|---|
| Masse Träger: | 75,0 g |
| Volumenstrom N₂ (Bildung der Wirbelschicht): | 17,2 l/min |
| Volumenstromverhältnis (V N₂(neu)/V (Abgas)): | 0,2 |

Der Al-Gehalt des Produktes betrug 10,2 % (m/m) und das Methyl/Al-Verhältnis 0,86. Ausbeute: 88 g = 94 %.

### Beispiel 5

### Metallocenträgerung

| | |
|---|---|
| Masse MAO/SiO₂ aus Beispiel 1: | 75 g |
| Masse Metallocen(=Bis[n-butylcyclopentadienyl]zirconiumdichlorid | 12,13 g |
| Lösungsmittel Toluen | 110 mL |
| Volumenstrom N₂ | 10,2 l/min |

Das Produkt aus Beispiel 1 wurde über über V 09 in B 03 eingebracht und durch Öffnen von V 05 die Wirbelschicht aufgebaut. Nach Stabilisierung der Wirbelschicht in B 05 wurde die Metallocenlösung über V 10 durch die Düse D 04 in die Wirbelschicht eindosiert. Durch Integration einer Kühlfalle im Abgasstrom zwischen zwischen B 05 und P 02 konnte das Lösungsmittel vollständig abgetrennt werden.

Die Versuchsdauer betrug 260 min.

Das Produkt fiel in Form eines freifließenden Pulvers mit einem Al-Gehalt von 18,2 % (m/m) und einem Zirkoniumgehalt von 3,05 % (m/m) an. Die Ausbeute betrug 94 %.

### Beispiel 6

### Prepolymerisation

Ein Teil des Produktes aus Beispiel 5 (75 g) wurde über V 09 in B 03 eingebracht und durch Öffnen von V 05 die Wirbelschicht aufgebaut. Durch Öffnen von V 12 und V 13 wurde (nach Stabilisierung der Wirbelschicht in B 05) ein Volumenstrom von 0,5 l/min Ethen zudosiert. Nach 4 min wurde die Olefindosierung unterbrochen und unter Gasrückführung noch 10 min in der Wirbelschicht belassen.

Das Produkt wurde nahezu quantitativ isoliert und wies eine Massenzunahme von 3,1 % auf.

### Beispiel 7

### Kontinuierliche Verfahrensweise

Die Reaktion wurde entsprechend der in Beispiel 4 gegebenen Parameter durchgeführt mit der Abänderung, daß zusätzlich zur TMA/Wasser-Dosierung über V 03/B 01 und V 07/B 04 nun auch V 10/B 06 geöffnet wurde, um die Metallocenlösung zu dosieren. Nach beendeter Dosierung wurden V 03/V 07 und V 10 geschlossen, das Material in der Wirbelschicht noch weitere 10 min belassen, um das Lösungsmittel abzutrennen. Durch Integration einer Kühlfalle im Abgasstrom zwischen zwischen B 05 und P 02 konnte das Lösungsmittel vollständig abgetrennt werden.

Dann wurden V 12 und V 13 geöffnet und ein Volumenstrom von 0,5 l/min Ethen zudosiert. Nach 4 min wurde die Etherdosierung durch Schließen von V 12 unterbrochen und unter Gasrückführung noch weitere 10 min in der Wirbelschicht belassen. Das Produkt fiel als freifließendes Pulver nahezu quantitativ an.

Die Ausbeute betrug 83,5 g, der Al-Gehalt betrug 17,4 % (m/m), der Zirkoniumgehalt 2,91 % (m/m).

## Patentansprüche

1. Verfahren zur Herstellung von auf inerten Trägermaterialien immobilisierten Metallocenkatalysatorsystemen aus Alkylaluminiumverbindungen, Wasser, Metallocenen, dadurch gekennzeichnet, daß die Trägermaterialien, bestehend aus porösen Oxiden eines oder mehrerer Elemente der Hauptgruppen II, III oder IV sowie der II. und IV. Nebengruppe des Periodensystems und die Reaktanden mit einem Gasstrom in Wirbelschichtreaktoren eindosiert und nach der Reaktion unmittelbar aus der Gasphase auf den Träger fixiert werden, wobei in den Wirbelschichtreaktoren ein Druck von 50 bis 2000 KPa und eine Temperatur von 2 bis 90 °C herscht.

2. Verfahren zur Herstellung von auf inerten Trägermaterialien immobilisierten Metallocenkatalysatorsystemen aus Alkylaluminiumverbindungen, Wasser, Metallocenen, dadurch gekennzeichnet, daß die Trägermaterialien, bestehend aus porösen Oxiden eines oder mehrerer Elemente der Hauptgruppen II, III oder IV sowie der II. und IV. Nebengruppe des Periodensystems und die Reaktanden mit einem Gasstrom in Wirbelschichtreaktoren eindosiert und während der Reaktion unmittelbar aus der Gasphase auf den Träger fixiert und ohne vorherige Isolierung durch Zudosierung eines Olefins in die Wirbelschicht zu einem Prepolymerisat umgesetzt werden, wobei in den Wirbelschichtreaktoren ein Druck von 50 bis 2000 KPa und eine Temperatur von 2 bis 90 °C herscht.

3. Verfahren gemäß den Ansprüchen 1 und 2, dadurch gekennzeichnet, daß das molare Verhältnis von Wasser : Alkylaluminiumverbindungen im Bereich von 0,5 : 1 bis 1,5 : 1 liegt.

4. Verfahren gemäß den Ansprüchen 1 bis 3, dadurch gekennzeichnet, daß als Alkylaluminiumverbindung Trimethylaluminium eingesetzt wird.

5. Verfahren gemäß den Ansprüchen 1 bis 4, dadurch gekennzeichnet, daß das molare Verhältnis von Metallocen : Alkylaluminoxanverbindungen im Bereich von 1 : 5000 bis 1 : 10 liegt.

6. Auf inerten Trägermaterialien immobilisierte Metallocen-katalysatorsysteme, hergestellt nach Verfahren gemäß den Ansprüchen 1 und 2.

7. Auf inerten Trägermaterialien immobilisierte Metallocen-katalysatorsysteme gemäß Anspruch 6, dadurch gekennzeichnet, daß auf dem Trägermaterial 3 - 40 Gew.-% Aluminium, bezogen auf geträgertes Katalysatorsystem, in Form von Aluminoxanen fixiert ist.

8. Auf inerten Trägermaterialien immobilisierte Metallocen-katalysatorsysteme gemäß Anspruch 6, dadurch gekennzeichnet, daß auf dem Trägermaterial 0,1 - 30 Gew.-% Metallocen, bezogen auf geträgertes Katalysatorsystem, in Form des Metallocenkatalysatorsystems fixiert ist.

9. Verfahren gemäß Anspruch 1, dadurch gekennzeichnet, daß als Trägermaterialien Al₂O₃, MgO oder SiO₂ mit Korngrößen von 1 - 300 µm, Oberflächen von 10 - 1000 m²/g und Porenvolumina von 0,5 - 3 cm³ und Wassergehalten von 0 - 15 Gew.-%, bezogen auf geträgertes Katalysatorsystem, eingesetzt werden.

## Claims

1. Process for the preparation of metallocene catalyst systems, immobilised on inert support materials, from alkylaluminium compounds, water and metallocenes, characterised in that the support materials, consisting of porous oxides of one or more elements of main groups II, III or IV or of sub-groups II or IV of the Periodic Table, and the reactants are metered into a fluidised-bed reactor with a gas stream and, after the reaction, are fixed to the support directly from the gas phase, there being a pressure of from 50 to 2000 KPa and a temperature of from 2 to 90°C in the fluidised-bed reactor.

2. Process for the preparation of metallocene catalyst systems, immobilised on inert support materials, from alkylaluminium compounds, water and metallocenes, characterised in that the support materials, consisting of porous oxides of one or more elements of main groups II, III or IV or of sub-groups II or IV of the Periodic Table, and the reactants are metered into a fluidised-bed reactor with a gas stream and, during the reaction, are fixed to the support directly from the gas phase, and without previous isolation are converted into a prepolymer by metering an olefin into the fluidised bed, there being a pressure of from 50 to 2000 KPa and a temperature of from 2 to 90°C in the fluidised-bed reactor.

3. Process according to claims 1 and 2, characterised in that the molar ratio of water:alkylaluminium compounds is in the range of from 0.5:1 to 1.5:1.

4. Process according to claims 1 to 3, characterised in that trimethylaluminium is used as alkylaluminium compound.

5. Process according to claims 1 to 4, characterised in that the molar ratio of metallocene:alkylaluminoxane compounds is in the range of from 1:5000 to 1:10.

6. Metallocene catalyst systems, immobilised on inert support materials, prepared in accordance with the process according to claims 1 and 2.

7. Metallocene catalyst systems, immobilised on inert support materials, according to claim 6, characterised in that from 3 to 40% by weight, based on supported catalyst system, of aluminium in the form of aluminoxane is fixed to the support material.

8. Metallocene catalyst systems, immobilised on inert support materials, according to claim 6, characterised in that from 0.1 to 30% by weight, based on supported catalyst system, of metallocene in the form of the metallocene catalyst system is fixed to the support material.

9. Process according to claim 1, characterised in that there are used as support materials Al₂O₃, MgO or SiO₂ having particle sizes of from 1 to 300 µm, surface areas of from 10 to 1000 m²/g and pore volumes of from 0.5 to 3 cm³, and water contents of from 0 to 15% by weight, based on supported catalyst system.

## Revendications

1. Procédé de préparation d'un système catalytique à base de métallocènes immobilisés sur des matières de support inertes constituées de composés d'alkylaluminium, d'eau, de métallocènes, caractérisé en ce que les matières de support constituées d'oxydes poreux d'un ou plusieurs éléments des Groupes principaux II, III ou IV ainsi que des Sous-groupes II et IV du Système Périodique et que l'on introduit progressivement les réactants avec un flux gazeux dans des réacteurs à lit fluidisé et après la réaction, on les fixe sur le support directement à partir de la phase gazeuse, la pression dans le réacteur à lit fluidisé étant de 50 à 2000 kPa et la température de 2 à 90 °C.

2. Procédé de préparation d'un système catalytique à base de métallocènes immobilisés sur des matières de support inertes constituées de composés d'alkylaluminium, d'eau, de métallocènes, caractérisé en ce que les matières de support constituées d'oxydes poreux d'un ou plusieurs éléments des Groupes principaux II, III ou IV ainsi que des Sous-groupes II et IV du Système Périodique et que l'on introduit progressivement les réactants avec un flux gazeux dans des réacteurs à lit fluidisé et après la réaction, on les fixe sur le support directement à partir de la phase gazeuse et on les fait réagir sans isolement préalable, par addition progressive d'une oléfine dans le lit fluidisé, pour obtenir un prépolymère, la pression dans le réacteur à lit fluidisé étant de 50 à 2000 kPa et la température de 2 à 90 °C.

3. Procédé selon les revendications 1 et 2, caractérisé en ce que le rapport en moles de l'eau:composés d'alkylaluminium est dans l'intervalle de 0,5:1 à 1,5:1.

4. Procédé selon les revendications 1 à 3, caractérisé en ce que l'on utilise le triméthylaluminium comme composé d'alkylaluminium.

5. Procédé selon les revendications 1 à 4, caractérisé en ce que le rapport en moles du métallocène:composés d'alkylaluminoxane est dans l'intervalle de 1:5000 à 1:10.

6. Système catalytique à base de métallocènes immobilisés sur des matières de support inertes préparées selon les procédés selon les revendications 1 et 2.

7. Système catalytique à base de métallocènes immobilisés sur des matières de support inertes selon la revendication 6, caractérisé en ce que sur la matière de support sont fixés 3 à 40 % en poids d'aluminium par rapport au système catalytique supporté sous forme d'aluminoxanes.

8. Système catalytique à base de métallocènes immobilisés sur des matières de support inertes selon la revendication 6, caractérisé en ce que sur la matière de support sont fixés 0,1 à 30 % en poids de métallocènes, par rapport au système catalytique supporté, sous forme du système catalytique à base de métallocènes.

9. Procédé selon la revendication 1, caractérisé en ce que l'on utilise en tant que matières de support Al₂O₃, MgO ou SiO₂ ayant une granulométrie de 1 à 300 µm, des surfaces de 10 à 1000 m²/g, et des volumes poreux de 0,5 à 3 cm³ et des teneurs en eau de 0 à 15 % par rapport au système catalytique supporté.
